(19)

Europäisches
Patentamt
European
Patent Office
Office européen
des brevets

(11) **EP 4 378 369 A1**

(12) **EUROPEAN PATENT APPLICATION**
published in accordance with Art. 153(4) EPC

(43) Date of publication:
**05.06.2024  Bulletin 2024/23**

(21) Application number: **23844059.8**

(22) Date of filing: **28.04.2023**

(51) International Patent Classification (IPC):
***A47L 15/42*** *(2006.01)*

(86) International application number:
**PCT/CN2023/091572**

(87) International publication number:
**WO 2024/082603 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.10.2022  CN 202211274022**

(71) Applicant: **Foshan Shunde Midea Washing
Appliances
Manufacturing Co., Ltd.
Foshan, Guangdong 528311 (CN)**

(72) Inventors:
- **ZHANG, Fang
  Foshan, Guangdong 528311 (CN)**
- **FENG, Qingsheng
  Foshan, Guangdong 528311 (CN)**
- **ZHANG, Duo
  Foshan, Guangdong 528311 (CN)**
- **CAI, Yantao
  Foshan, Guangdong 528311 (CN)**
- **SHI, Yiyuan
  Foshan, Guangdong 528311 (CN)**

(74) Representative: **RGTH
Patentanwälte PartGmbB
Neuer Wall 10
20354 Hamburg (DE)**

(54) **DISH WASHING MACHINE AND DRAINAGE FAULT DETECTION METHOD AND APPARATUS THEREFOR, AND READABLE STORAGE MEDIUM**

(57)    Provided are a dishwasher, a method and apparatus for detecting a drainage fault thereof, and a readable storage medium. The method for detecting the drainage fault for the dishwasher includes: obtaining a current temperature of a current solution in the dishwasher at a current washing stage; determining a current theoretical temperature based on an amount of filling water at the current washing stage and a water filling and drainage parameter at each stage prior to the current washing stage; and determining whether there is a drainage fault or not based on the current temperature and the current theoretical temperature.

FIG. 1

## Description

## CROSS-REFERENCE TO RELATED APPLICATION

The present application claims priorities to Chinese Patent Application No. 202211274022.8 filed on October 18, 2022 and entitled "DISHWASHER, METHOD AND APPARATUS FOR DETECTING DRAINAGE FAULT THEREOF, AND READABLE STORAGE MEDIUM", the entire disclosures of which is incorporated herein by reference.

## FIELD

The present disclosure relates to the technical field of kitchen household appliances, and in particular, to a dishwasher, a method and apparatus for detecting a drainage fault thereof, and a readable storage medium.

## BACKGROUND

With the improvement of material living standards, a dishwasher, which free up hands, is gradually becoming standard configuration for a high-quality life. Compared to traditional manual washing, the dishwasher has the advantages such as through washing, sterilization, water and labor saving. However, during use of the dishwasher, issues like drainage pipe blockage or similar obstructions may inevitably arise. For example, when a dishwasher program fails to properly give an alarm to the issues, as water accumulates, water may over flows from a cavity. There is a risk of submerging a customer's floor.

## SUMMARY

The present disclosure aims to solve or improve at least one of the technical problems as described above.

According to one embodiment of the present disclosure, a method for detecting a drainage fault for a dishwasher is provided.

According to one embodiment of the present disclosure, an apparatus for detecting a drainage fault for a dishwasher is provided.

According to one embodiment of the present disclosure, a device for detecting a drainage fault for a dishwasher is provided.

According to one embodiment of the present disclosure, a readable storage medium is provided.

According to one embodiment of the present disclosure, a dishwasher is provided.

In technical solutions according to one embodiment of the present disclosure, a method for detecting a drainage fault for a dishwasher is provided. The method comprises: obtaining a current temperature of a current solution in the dishwasher at a current washing stage; determining a current theoretical temperature based on an amount of filling water at the current washing stage and a water filling and drainage parameter at each stage prior to the current washing stage; and determining whether there is a drainage fault based on the current temperature.

There may be several stages during dishwashing by the dishwasher. A wash water solution is heated at each stage, so washing temperatures at different stages may be the same or different, and heat of washing solutions at different stages may also vary over amount and the temperature of the solution. Therefore, there is a theoretical temperature corresponding to amount and a temperature of a currently influent solution. However, an actual temperature of the solution at each stage is affected by multiple parameters, and one of the multiple parameters is a residual solution. The presence of the residual solution means that the residual solution with a temperature itself may bring some heat to the next stage. In addition, when the residual solution at each stage is continuously accumulated to the next stage, the heat may lead to a difference between the actual temperature and the theoretical temperature. In the present disclosure, the difference is utilized to determine whether there is the drainage fault. In other word, a more significant difference between the actual temperature and the theoretical temperature may be caused if there is a lot of residual solution (that means unfavorable or malfunctioning drainage), at which point the drainage would be seen as occurring a fault.

A filling water temperature is generally equal to a temperature of indoor tap water. Moreover, filling water is heated at each washing stage. Therefore, residual water directly causes a current temperature of a current liquid to be higher than the calculated current theoretical temperature. Therefore, according to the method for detecting the drainage fault in the present disclosure, whether there is the drainage fault is determined by comparing the current temperature of the current liquid in the dishwasher with the current theoretical temperature. In the method, since the current theoretical temperature is related to a parameter at the current stage and the water filling and drainage parameter at each stage prior to the current stage, an effect of water filling and drainage at each stage prior to the current stage on the actual temperature may be reflected. Therefore, whether the current temperature is affected by the drainage fault may be well determined to further determine whether there is the drainage fault.

According to the method for detecting the drainage fault disclosed by the present disclosure, a temperature may be measured by a temperature detection device such as a thermistor. Therefore, detection of the drainage fault may be realized without devices such as a microswitch, a high-water-level sensor, or a buoy in the related art.

According to the above technical solutions, the determining the current theoretical temperature based on the amount of filling water at the current washing stage and the water filling and drainage parameter at each stage prior to the current washing stage comprises: determining, based on the water filling and drainage parameter at each stage prior to the current washing stage, a first heat released when a pre-drainage temperature at a stage previous to the current stage lowers to the current theoretical temperature; determining, based on the amount of filling water and a current filling water temperature at the current washing stage, a second heat absorbed when the current filling water temperature is changed to the current theoretical temperature; and determining the current theoretical temperature based on the first heat is equal to the second heat.

For the theoretical temperature, provided is a heat formula of $Q = c \times m \times \Delta t$, where c represents a specific heat capacity of a substance, m represents mass of an object, $\Delta t$ represents a temperature difference between a start temperature and a final temperature at each stage. According to the heat formula, a theoretical temperature corresponding to the amount of filling water at the current stage may be calculated based on an amount of filling water and an initial temperature of the water filling the dishwasher at each washing stage and the temperature before drainage and based on a first heat released at each stage previous to the current washing stage is equal to second heat obtained at the current washing stage from the each stage prior to the current washing stage.

According to the above technical solutions, the water filling and drainage parameter at each stage prior to the current washing stage comprises a filling water temperature, an amount of filling water, and a temperature before drainage at each stage prior to the current washing stage.

According to the above technical solutions, the method comprises when the current washing stage is at a second washing stage: determining, based on an amount of filling water at a first washing stage and a temperature before drainage at the first washing stage and the current theoretical temperature, a first heat released from the amount of filling water at the first washing stage when a filling water temperature at the first washing stage lowers to the current theoretical temperature; and determining, based on an amount of filling water at the second washing stage and a filling water temperature at the second washing stage and the current theoretical temperature, a second heat required for the amount of filling water at the second washing stage to rise to the current theoretical temperature from the filling water temperature at the second washing stage.

In this technical solution, a case where a complete drainage fault during washing at the first washing stage is given, and a current theoretical temperature under a fault of no drainage at all is calculated by using all filling water at the first washing stage.

According to the above technical solutions, the water filling and drainage parameter at each stage prior to the current washing stage comprises a filling water temperature, a temperature before drainage, and rated amount of residual water at each stage prior to the current washing stage.

According to the above technical solutions, the method comprises when the current washing stage is at a second washing stage: determining, based on rated amount of residual water at a first washing stage and a temperature before drainage at the first washing stage and the current theoretical temperature, a first heat released from the rated residual water amount at the first washing stage when the temperature before drainage at the first washing stage lowers to the current theoretical temperature; and determining, based on the amount of filling water at the second washing stage and a filling water temperature at the second washing stage and the current theoretical temperature, third heat required for the amount of filling water at the second washing stage to rise to the current theoretical temperature from the filling water temperature at the second washing stage.

In this technical solution, the current theoretical temperature is calculated by using the rated amount residual water, i.e., the temperature in the dishwasher should be the current theoretical temperature in a case where there is no drainage fault in a washing process previous to the current stage.

According to the above technical solutions, the determining whether there is the drainage fault based on the current temperature and the current theoretical temperature comprises: determining that there is the drainage fault when the current temperature is greater than the current theoretical temperature; and determining that there is no drainage fault when the current temperature is smaller than or equal to the current theoretical temperature.

According to the above technical solutions, the determining whether there is the drainage fault based on the current temperature and the current theoretical temperature comprises: determining that there is the drainage fault when a temperature difference between the current temperature and the current theoretical temperature is outside a predetermined temperature difference interval; and determining that there is no drainage fault when the temperature difference between the current temperature and the current theoretical temperature is within the predetermined temperature difference interval.

In this technical solution, whether there is a drainage fault in the dishwasher is determined based on a temperature difference between a current temperature of a liquid in a washing cavity and a current theoretical temperature of the liquid in the washing cavity. Therefore, it is possible to make the determination more accurate and avoid an effect of temperature fluctuations.

According to the above technical solutions, the predetermined temperature difference interval is greater than or equal to 0°C and smaller than or equal to 5°C.

In the technical solutions according to one embodiment of the present disclosure, an apparatus for detecting a drainage fault for a dishwasher is provided. The apparatus comprises: an obtaining unit configured to obtain a current temperature of a current solution in the dishwasher at a current washing stage; and a determination unit configured to determine whether there is a drainage fault based on the current temperature and a current theoretical temperature.

With the apparatus for detecting the drainage fault of the dishwasher according to the present disclosure, the method for detecting the drainage fault of the dishwasher according to the above embodiments of the present disclosure may be realized. Therefore, the apparatus for detecting the drainage fault of the dishwasher according to the present disclosure has all the beneficial effects of the method for detecting the drainage fault of the dishwasher according to any one of the technical solutions in the above embodiments of the present disclosure, and details thereof will not be repeated herein.

In the technical solutions according to one embodiment of the present disclosure, a device for detecting a drainage fault for a dishwasher is provided. The device comprises a processing unit. The processing unit comprises: a memory having a computer program stored thereon; and a processor configured to implement, when running the computer program, the method for detecting the drainage fault of the dishwasher according to any one of the technical solutions in the above embodiments of the present disclosure.

In the technical solutions according to one embodiment of the present disclosure, a readable storage medium is provided. The readable storage medium comprises a processing unit. The processing unit comprises: a memory having a computer program stored thereon; and a processor configured to implement, when running the computer program, the method for detecting the drainage fault for the dishwasher according to any one of the technical solutions in the above embodiments of the present disclosure.

In the technical solutions according to one embodiment of the present disclosure, a dishwasher is provided. The dishwasher comprises the apparatus or device for detecting a drainage fault of a dishwasher according to any one of the technical solutions in the above embodiments of the present disclosure; or the readable storage medium according to any one of the technical solutions in the above embodiments of the present disclosure.

Additional aspects and advantages of the present disclosure will be provided at least in part in the following description, or will become apparent at least in part from the following description, or can be learned from practicing of the present disclosure.

## BRIEF DESCRIPTION OF THE DRAWINGS

The above and/or additional aspects and advantages of the present disclosure will become more apparent and more understandable from the following description of embodiments taken in conjunction with the accompanying drawings, in which:

FIG. 1 is a flowchart of a method for detecting a drainage fault for a dishwasher according to an embodiment of the present disclosure;
FIG. 2 is a flowchart of a method for detecting a drainage fault for a dishwasher according to an embodiment of the present disclosure;
FIG. 3 is a flowchart of a method for detecting a drainage fault for a dishwasher according to an embodiment of the present disclosure;
FIG. 4 is a flowchart of a method for detecting a drainage fault for a dishwasher according to an embodiment of the present disclosure;
FIG. 5 is a flowchart of a method for detecting a drainage fault for a dishwasher according to an embodiment of the present disclosure;
FIG. 6 is a schematic view of an apparatus for detecting a drainage fault for a dishwasher according to one embodiment of the present disclosure;
FIG. 7 is a schematic view of an apparatus for detecting a drainage fault for a dishwasher according to one embodiment of the present disclosure.

## DETAILED DESCRIPTION

In order to understand the above aspects, features, and advantages of embodiments of the present disclosure more clearly, the embodiments of the present disclosure will be further described in detail below in conjunction with the accompanying drawings and specific implementations. It should be noted that embodiments of the present disclosure and features disclosed in the embodiments of the present disclosure can be combined with each other without conflicting.

In the following description, many specific details are provided to facilitate full understanding of the embodiments of the present disclosure. However, the embodiments of the present disclosure can be implemented in other manners different from those described herein. Therefore, the scope of the embodiments of the present disclosure is not limited by specific embodiments disclosed below.

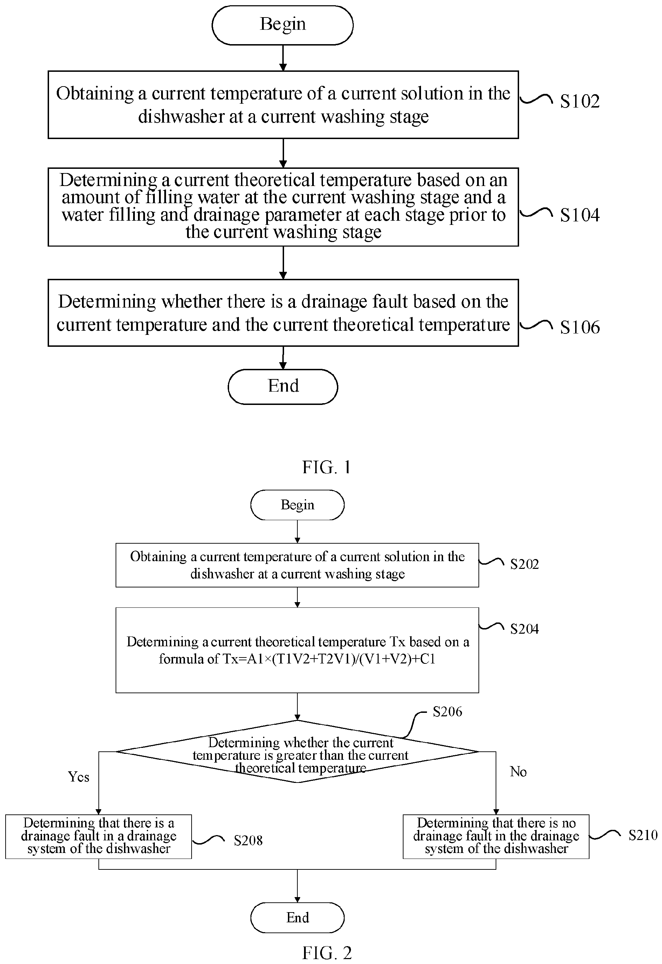

As illustrated in FIG. 1, a method for detecting a drainage fault of a dishwasher according to the present disclosure comprises operations at steps S102 to S106.

At step S102, a current temperature of a current solution in the dishwasher at a current washing stage is obtained.

At step S104, a current theoretical temperature is determined based on an amount of filling water at the current washing stage and a water filling and drainage parameter at each stage prior to the current washing stage.

At step S106, it is determined that whether there is a drainage fault based on the current temperature and the current theoretical temperature.

In this method, the current theoretical temperature is determined based on the amount of filling water during water filling process at the current washing stage and the water filling and drainage parameter at each stage prior to the current washing stage. Because the water filling and drainage parameter at each stage is considered, an effect of heat of water filling and drainage at each stage prior to the current stage is also taken into account. In this way, the effect of the heat of the water filling and drainage at all stages prior to the current stage on a temperature of the current solution is accumulated into the current stage, resulting in formation of the current theoretical temperature. When the current theoretical temperature is higher than the current temperature, it indicates that poor drainage occurred at a stage previous to the current stage causing the heat at the stage previous to the current stage to be carried to the current stage. In this case, whether the drainage fault currently occurs may be accurately determined when the current theoretical temperature is used to compare with the current temperature.

In this embodiment, the current washing stage is at a second washing stage. A water filling and drainage parameter at a first washing stage prior to the current washing stage specifically is a filling water temperature, an amount of filling water, and a pre-drainage temperature at the first washing stage.

As illustrated in FIG. 2, a method for detecting a drainage fault for a dishwasher according to an embodiment of the present disclosure comprises operations at steps S202 to S210.

At step S202, a current temperature of a current solution in the dishwasher at a current washing stage is obtained.

At step S204, a current theoretical temperature Tx is determined based on a formula of $Tx=A1\times(T1V2+T2V1)/(V1+V2)+C1$.

At step S206, it is determined that whether the current temperature is greater than the current theoretical temperature Tx, if the current temperature is greater than the current theoretical temperature, step 208 is performed; and if the current temperature is smaller than or equal to the current theoretical temperature, step 210 is performed.

At step S208, it is determined that there is a drainage fault in a drainage system of the dishwasher.

At step S210, it is determined that there is no drainage fault in the drainage system of the dishwasher.

In this embodiment, the current theoretical temperature is calculated based on completely failed drainage at the first washing stage. For the dishwasher, the filling water temperature at each washing stage is usually the same, which is basically a temperature of an external water source to which the dishwasher is connected. Therefore, it may be considered that the filling water temperature at the first washing stage is equal to a filling water temperature at the second washing stage. As filling water is heated at each washing stage, a temperature before drainage is higher than the filling water temperature after the first washing stage is ended. For the second washing stage, if the heat is left from the first washing stage due to the drainage fault, then a current theoretical temperature at the second washing stage should be related to the heat from the first washing stage. According to a heat formula, heat released by a solution that is not discharged at the first washing stage (the maximum amount of the solution is the whole amount of filling water at the first washing stage) to reach the current theoretical temperature from the temperature before drainage at the first washing stage is Q1. The heat is heat Q2 required for a current amount of filling water to reach the current theoretical temperature from the filling water temperature at the second washing stage.

The above formula $Tx=(T1\times V2+T2\times V1)/(V1+V2)$ may be obtained according to formulas below.

The first heat:

$$Q1= c\times m1\times \Delta t1= c\times\rho\times V1\times(T2-Tx),$$

The second heat:

$$Q2= c\times m2\times \Delta t2= c\times\rho\times V2\times(Tx-T1),$$

$$Q1=Q2$$

Considering the effect of various factors such as an actual application scenario and a type of the dishwasher, correction coefficients A1 and C1 are added to obtain a final formula.

$$Tx=A1\times(T1\times V2+T2\times V1)/(V1+V2)+C1,$$

where c represents a specific heat capacity of the solution, m1 represents mass of filling water at the first washing stage, m2 represents predetermined mass of current filling water at the second washing stage, $\rho$ represents a specific gravity of the solution, $\Delta t1$ and $\Delta t2$ respectively represent a temperature difference between an initial temperature and a final temperature at each stage, Tx represents the current theoretical temperature; A1 and C1 both represent the correction coefficients; T1 represents the filling water temperature at the first washing stage and the second washing stage; V1 represents the amount of filling water at the first washing stage; T2 represents the temperature before drainage at the first washing stage; and V2 represents predetermined current amount of filling water at the second washing stage and is smaller than the total amount of filling water designed at the second washing stage.

A1 and C1 may be empirical values depending on different types of dishwashers and have a value in the range of 0<A1<1 and 0<C1<10.

In an embodiment, the current theoretical temperature is calculated in combination with a parameter during first washing and a parameter during second washing. In this way, the effect of the previous washing process on the next washing process is considered, which may determine the current theoretical temperature accurately. Therefore, whether there is the drainage fault may be determined through a comparison result of the current theoretical temperature and the current temperature.

In this way, as an operating parameter of the dishwasher is known, i.e., a filling water temperature, an amount of filling water, and a temperature before drainage at each stage are known. In this way, the filling water temperature, the amount of filling water, and the temperature before drainage at the first washing stage are all known. Once the current washing stage is filled with V2 volume of water, a current theoretical temperature of a current liquid at the current washing stage may be determined by the system based on the formula. It should be understood that before determining whether a drainage fault has occurred, heating does not start at each washing stage. Instead, V2 volume of filling water is filled firstly to perform the fault determination. Therefore, a temperature the filling water V2 is the filling water temperature. In addition, since a current temperature of the current liquid is obtained, when the obtained current temperature is greater than the calculated current theoretical temperature, it is indicated that a dishwasher drainage system is blocked. Otherwise, it is determined that the dishwasher drainage system is not blocked. According to the method for detecting the drainage fault in this embodiment, the current theoretical temperature is directly calculated by using the worst drainage state in which all the filling water at the first washing stage is not discharged. The current theoretical temperature is determined by using the current theoretical temperature in the worst drainage state. Therefore, overflow caused by continuously subsequent washing and water filling without drainage at the first washing stage may be avoided.

Further, if washing equipment is tested at a third washing stage, the current theoretical temperature may be calculated by the system based on each of the filling water temperature and the amount of filling water during water filling at two stages prior to the third washing stage, the temperature before the drainage at the two stages prior to the third washing stage, and the amount of current filling water at the third washing stage. Furthermore, whether the drainage system of the dishwasher is blocked is determined by comparing the current theoretical temperature with the current temperature. Similarly, for a case where there are multiple washing stages, the effect of each washing stage on the subsequent washing stage is also considered to obtain an accurate current theoretical temperature.

For step S206, it should be understood that whether there is a fault is possible to be determined by determining whether the temperature difference between the current temperature and the current theoretical temperature is within the predetermined temperature difference interval instead of only comparing the current temperature with the current theoretical temperature. In this way, an error in determination caused by a small temperature difference may be prevented.

In this embodiment, the current washing stage is at the second washing stage. The water filling and drainage parameter at the first washing stage prior to the current washing stage specifically comprises the filling water temperature, the temperature before drainage, and the rated amount of residual water at the first washing stage.

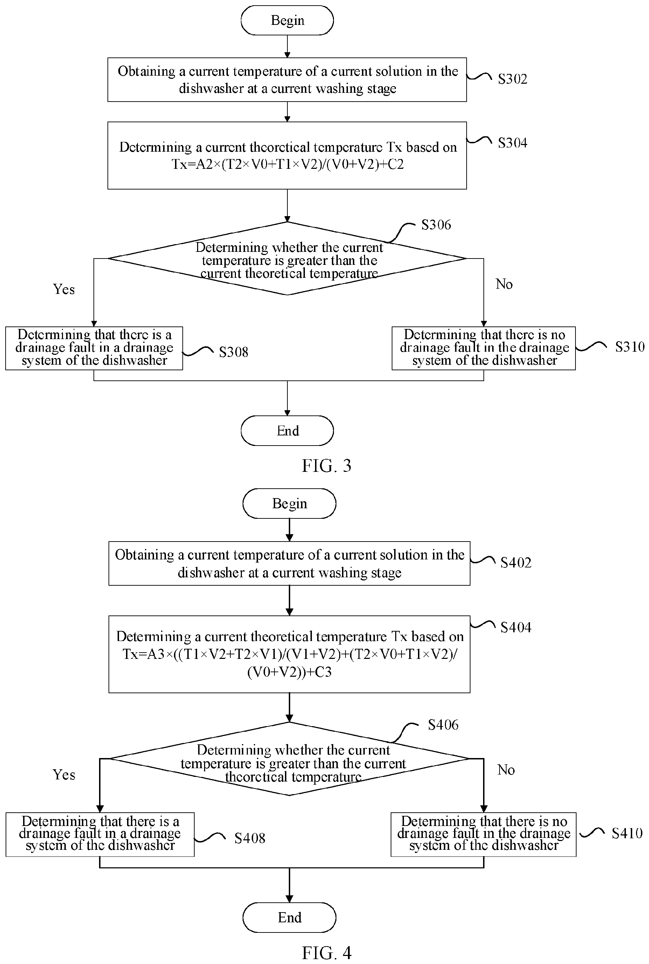

As illustrated in FIG. 3, a method for detecting a drainage fault for a dishwasher according to an embodiment of the present disclosure comprises operations at steps S302 to S310.

At step S302, a current temperature of a current solution in the dishwasher at a current washing stage is obtained.

At step S304, a current theoretical temperature $T_x$ is determined based on a formula $T_x = A2 \times (T2 \times V0 + T1 \times V2)/(V0+V2) + C2$.

At step S306, it is determined that whether the current temperature is greater than the current theoretical temperature, if the current temperature is greater than the current theoretical temperature, performing step 308; and if the current temperature is smaller than or equal to the current theoretical temperature, performing step 310.

At step S308, it is determined that there is a drainage fault in a drainage system of the dishwasher.

At step S310, it is determined that there is no drainage fault in the drainage system of the dishwasher.

In this embodiment, if there is no drainage fault, a current theoretical temperature of the amount of filling water washed at the second washing stage is determined by using the effect of heat from the rated amount of residual water at the first washing stage on a temperature of the filling water for washing process at the second washing stage. The current theoretical temperature of the amount of filling water for washing process at the second washing stage is used as a reference temperature for the drainage fault to determine the drainage fault.

Similarly, the above formula $T_x = (T2 \times V0 + T1 \times V2)/(V0+V2)$ may be obtained according to formulas below.

The first heat:

$$Q1 = c \times m1 \times \triangle t1 = c \times \rho \times V0 \times (T2-T_x),$$

The second heat:

$$Q2 = c \times m2 \times \triangle t2 = c \times \rho \times V2 \times (T_x-T1),$$

$$Q1 = Q2$$

Considering the effect of various factors such as the actual application scenario and the type of the dishwasher, correction coefficients A2 and C2 are added to obtain a final formula.

$$Tx=A2\times(T2\times V0+T1\times V2)/(V0+V2)+C2,$$

where c represents the specific heat capacity of the solution, m1 represents the mass of the filling water at the first washing stage, m2 represents the predetermined mass of the current filling water at the second washing stage, $\rho$ represents the specific gravity of the solution, $\Delta t1$ and $\Delta t2$ respectively represent the temperature difference between the initial temperature and the final temperature at each stage, Tx represents the current theoretical temperature; A2 and C2 both represent the correction coefficients; T1 represents the filling water temperature at the first washing stage and the second washing stage; T2 represents the temperature before drainage at the first washing stage; V2 represents the predetermined amount of filling water at the second washing stage and is smaller than the total amount of filling water designed at the second washing stage; and V0 represents the rated amount of residual water at the first washing stage.

A2 and C2 may be empirical values depending on the different types of the dishwashers and have a value in the range of 0<A2<1 and 0<C2<10.

In this embodiment, the current theoretical temperature is calculated in consideration of rated amount of residual water during drainage at each stage prior to the current washing stage but without consideration of the amount of filling water at each stage prior to the current washing stage. In this embodiment, the current theoretical temperature is determined based on a filling water temperature, a temperature before drainage, and rated amount of residual water at each stage prior to the current washing stage and an amount of current solution in the dishwasher at the current washing stage. In this way, after the current temperature is obtained, it is determined that whether the drainage system is blocked based on a current temperature and a current theoretical temperature of the liquid in the dishwasher at the current washing stage.

According to the technical solution, the rated amount of residual water is used to calculate the current theoretical temperature, i.e., the current theoretical temperature should be in the dishwasher without faults in the drainage of the dishwasher. This current theoretical temperature is different from the current theoretical temperature in a case where there is the drainage fault. But as long as the measured temperature is higher than this temperature, it means that there must be other filling water except normal residual water, and it may also be reminded that there is the drainage fault. Compared with the current theoretical temperature calculated under the completely failed drainage in the above embodiments, the drainage fault is determined more accurately in this technical solution.

In addition, in the technical solution, the current theoretical temperature is calculated without considering the amount of filling water at each stage prior to the current washing stage, which may omit parameters such as the amount of filling water at each washing stage and improve computation speed. In addition, it is possible to ensure timeliness of determining whether there is a blockage and reduce the requirement for calculation amount of a controller.

In the above embodiments, with the consideration of the effects of temperature fluctuations, if only comparing the values, the error in determination caused by some external factors may occur. For example, in a case of a very small difference between the two temperatures, it may not indicate that there is the drainage fault. Therefore, in the present disclosure, whether there is the drainage fault in the dishwasher may also be determined based on the temperature difference between the current temperature of the liquid in the washing cavity and the current theoretical temperature of the liquid in the washing cavity. When the temperature difference between the current temperature of the liquid in the washing cavity and the current theoretical temperature of the liquid in the washing cavity is outside the predetermined temperature difference interval, it is determined that there is the drainage fault. When the temperature difference between the current temperature of the liquid in the washing cavity and the current theoretical temperature of the liquid in the washing cavity is within the predetermined temperature difference interval, it is determined that there is no drainage fault in the dishwasher. It is determined that whether there is the drainage fault in the dishwasher based on the temperature difference between the current temperature of the liquid in the washing cavity and the current theoretical temperature of the liquid in the washing cavity, which makes the determination more accurate and avoids the influence caused by temperature fluctuations.

In the above embodiments, the predetermined temperature difference interval is greater than or equal to 0°C and smaller than or equal to 5°C. Certainly, considering that the dishwasher has different types and different operating parameters, the predetermined temperature difference interval is greater than or equal to 0°C and smaller than or equal to 10°C.

Two cases are considered in the above embodiments. In an embodiment, the case where no drainage at all at the first washing stage is considered. The case where no drainage fault at all is taken into account in another embodiment. The problem of poor drainage may be determined by determining the current theoretical temperature based on the two cases. In practice, there may be a case between the two cases. For these cases, an empirical formula obtained by using formulas in the two cases may be used. In a further embodiment, as an example, the current washing stage is at the second washing stage, and the water filling and drainage parameter at the first washing stage prior to the current washing stage may specifically be the filling water temperature, the amount of filling water, the temperature before drainage, and the rated amount of residual water at the first washing stage.

As illustrated in FIG. 4, a method for detecting a drainage fault for a dishwasher according to an embodiment of the present disclosure comprises operations at steps S402 to S410.

At step S402, a current temperature of a current solution in the dishwasher at a current washing stage (at the second washing stage) is obtained.

At step S404, a current theoretical temperature $T_x$ is determined based on a formula $T_x=A3\times((T1\times V2+T2\times V1)/(V1+V2)+(T2\times V0+T1\times V2)/(V0+V2))+C3$.

At step S406, it is determined that whether the current temperature is greater than the current theoretical temperature, when the current temperature is greater than the current theoretical temperature, performing step 408; and when the current temperature is smaller than or equal to the current theoretical temperature, performing step 410.

At step S408, it is determined that there is a drainage fault in a drainage system of the dishwasher.

At step S410, it is determined that there is no drainage fault in the drainage system of the dishwasher.

Here, $T_x$ is the current theoretical temperature; A3 and C3 both represent the correction coefficients; T1 represents the filling water temperature at the first washing stage and the second washing stage; V1 represents the amount of filling water at the first washing stage; T2 represents the temperature before drainage at the first washing stage; V2 represents the predetermined amount of current filling water at the second washing stage and is smaller than the total amount of filling water designed at the second washing stage; and V0 represents the rated amount of residual water at the first washing stage.

A3 and C3 may be empirical values depending on the different types of the dishwashers and have a value in the range of 0<A3<1 and 0<C3<10.

Since the filling water temperature during each water filling process, the amount of filling water during water filling process and the temperature before the drainage and the rated amount of residual water before the drainage in the dishwasher may be recorded, i.e. the filling water temperature during water filling process at the first washing stage, the amount of filling water during water filling process, the temperature before the drainage and the rated amount of residual water before the drainage, and the filling water temperature at the second washing stage are all known. In this way, when the current washing stage is filled with a predetermined volume of water, the current theoretical temperature of the current liquid at the current washing stage may be determined by the system based on the formula, to determine whether the drainage system is failed or not.

Similarly, like the above embodiments, for step S406, it is possible to determine whether there is a fault by determining whether the temperature difference between the current temperature and the current theoretical temperature is within the predetermined temperature difference interval instead of only comparing the current temperature with the current theoretical temperature. In this way, the error in determination caused by the small temperature difference may be avoided.

Further, if the washing equipment is tested at the third washing stage, the current theoretical temperature may be calculated by the system based on the filling water temperature and the amount of filling water during water filling process at each of the two stages prior to the third washing stage, the temperature before the drainage at each of the two stages prior to the third washing stage, a rated amount residual water after the drainage, and the amount of current filling water at the third washing stage. Furthermore, it is determined that whether the drainage system of the dishwasher is blocked by comparing the current theoretical temperature with the current temperature. Similarly, if the washing equipment is tested at a fourth washing stage, the current theoretical temperature may be calculated by the system based on a filling water temperature and an amount of filling water during water filling process at each of three stages prior to the fourth washing stage, a temperature before the drainage at each of the three stages prior to the fourth washing stage, a rated amount of residual water at each of the three stages prior to the fourth washing stage, and the amount of current filling water during water filling process at the fourth washing stage, and so on.

In this way, according to the technical solution, as the filling water temperature, the amount of filling water, the temperature before the drainage, and the rated amount of residual water at each water filling stage in the dishwasher are known, i.e., the filling water temperature and the amount of filling water during water filling process at the first washing stage, the temperature before the drainage, the rated amount of residual water, and the filling water temperature at the second washing stage are known, when the current washing stage is filled with the predetermined volume of water, the current theoretical temperature of the current liquid at the current washing stage may be determined by the system based on the formula, to determine whether there is the fault in the drainage system. According to the technical solution, the rated amount of residual water is considered, which may further ensure measurement accuracy and avoid the effect of the amount of residual water on detection for a dishwasher with the rated amount of residual water during drainage.

In the above embodiments, A1, C1, A2, C2, A3, and C3 may be the same or different, which depends on the type of dishwasher, the setting of the application scenario, or the like.

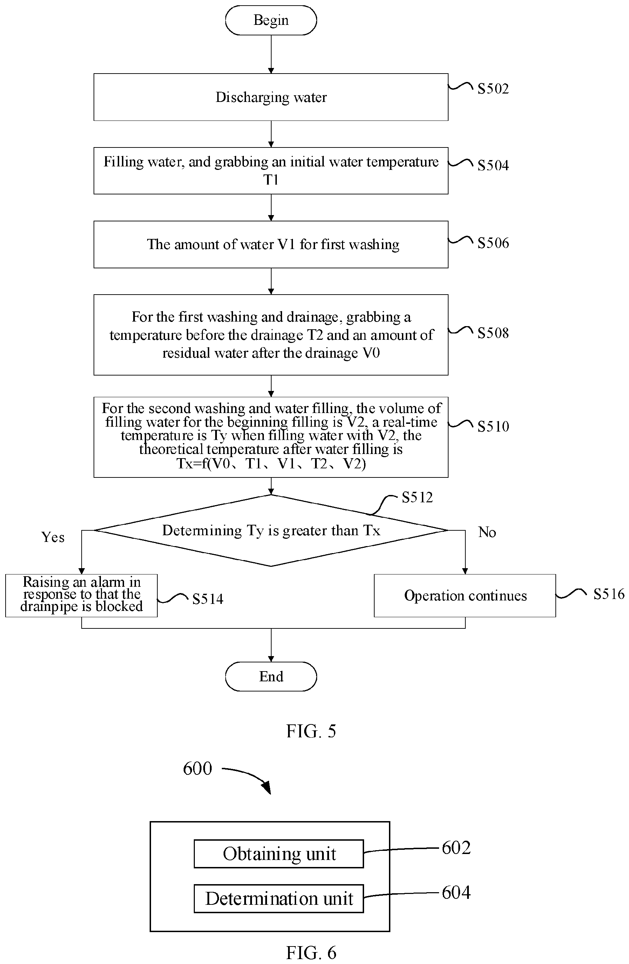

As illustrated in FIG. 5, in this embodiment, a thermistor is arranged in a water cup of the dishwasher for detecting and controlling a temperature for the dishwasher during operation in real time. Temperature information is recorded by software. When these temperatures are required for determination or control, the software may invoke the stored temperature information. When a predetermined mathematical relationship is given to these temperatures, a state of the dishwasher may be determined. In this embodiment, a predetermined function relationship is given to the temperature, which may determine whether a drainpipe is blocked.

As illustrated in FIG. 5, the dishwasher is started and enters the first washing stage (S502). The filling water temperature at the first washing stage is an initial water temperature, and the software grabs the initial water temperature, i.e., the filling water temperature T1 (S504). The amount of filling water of V1 is known to be designed at the first wash (pre-wash or main wash) (S506). After the first wash is completed, the water is discharged, and a temperature T2 before the drainage is grabbed (S508). After the drainage, the dishwasher enters the second washing stage. When the amount of filling water at the second washing stage is designed as V and a predetermined volume of filling water for the beginning filling is V2 (V2 < V), the software automatically determines whether the drainpipe is blocked.

A corresponding real-time temperature Ty is grabbed after filling water with V2. The amount of residual water of a normal washing and drainage cup is set to be V0. A corresponding theoretical temperature Tx=f(V0, T1, V1, T2, V2) after the predetermined volume V2 of water is filled is calculated according to functions of one or more of V0, T1, V1, T2, and V2 (S510). When Ty>Tx, an alarm is raised in response to that the drainpipe is blocked (S514). Otherwise, the operation continues (S516).

With the method for detecting the drainage fault according to the present disclosure, the current temperature of the current solution in the dishwasher at the current washing stage is obtained during detection for the drainage fault. Furthermore, the current theoretical temperature of the solution at the current washing stage is calculated based on the filling water temperature during the first water filling process, the amount of filling water and the temperature before the drainage during water filling process, the rated amount of residual water, and the amount of filling water and the filling water temperature at the second washing. Finally, it is determined that whether there is the fault in the drainage system of the dishwasher based on the current temperature of the liquid in the dishwasher at the current washing stage and the current theoretical temperature of the liquid in the dishwasher at the current washing stage.

Here, it should be understood that a relational expression of the theoretical temperature Tx=f(V0, T1, V1, T2, V2) at step S510 may be different based on the different types or application scenarios of the dishwasher. Moreover, it should also be understood that the corresponding Tx may also be stored in the dishwasher in advance based on each parameter value in the relational expression. Therefore, the corresponding theoretical temperature may be directly obtained in a searching manner rather than through calculation for each time.

It should be noted that, in the present disclosure, all washing stages refer to stages such as a main washing stage and a rinse stage. As long as a stage has one time of water filling and drainage, it may be referred to as a washing stage. In addition, the filling water temperature at each washing stage during water filling process may be the same or different, which may be specifically set based on the washing requirements.

As illustrated in FIG. 6, according to an embodiment the present disclosure, an apparatus 600 for detecting a drainage fault of a dishwasher is provided. The apparatus 600 comprises an obtaining unit 602 and a determination unit 604.

The obtaining unit 602 obtains a current temperature of a current solution in the dishwasher at a current washing stage. For example, the obtaining unit 602 may be a thermocouple, a temperature sensor, or another device that may be used to obtain a liquid temperature. In an actual operation process, the obtaining unit 602 may obtain the current temperature of the current solution in the dishwasher and record the temperature information through the software. In this way, when the temperatures are required to be used for drainage fault detection, the stored temperature information may be invoked to perform fault determination. The determination unit 604 determines whether there is the drainage fault based on the current temperature and the current theoretical temperature of the liquid in the dishwasher at the current washing stage.

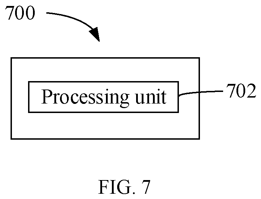

As illustrated in FIG. 7, according to an embodiment of the present disclosure, an device 700 for detecting a drainage fault of a dishwasher is provided. The device 700 comprises a processing unit 702. The processing unit 702 comprises a memory storing a computer program thereon and a processor configured to implement, when running the computer program, the method for detecting the drainage fault for the dishwasher according to the above embodiments of the present disclosure.

According to an embodiment of the present disclosure, a readable storage medium is provided. The readable storage medium comprises: a memory storing a computer program thereon; and a processor configured to implement, when running the computer program, the method for detecting the drainage fault of the dishwasher according to an embodiment of the present disclosure.

According to an embodiment of the present disclosure, a dishwasher is provided. The dishwasher comprises the apparatus for detecting a drainage fault for a dishwasher according to the above embodiments of the present disclosure or the readable storage medium according to an embodiment of the present disclosure.

According to the present disclosure, by obtaining the current temperature of the current liquid in the dishwasher at the current washing stage, it may be determined that whether there is the fault in the drainage system of the dishwasher based on the current temperature and the current theoretical temperature. On the one hand, it is possible to provide a timely alarm in case of drainage system malfunctions, preventing water overflow drainage blockages. On the other hand, the production cost is reduced without relying on physical devices such as a microswitch and a high-water-level sensor. In addition, in the present disclosure, the current theoretical temperature is determined in combination with parameters such as a water filling parameter and a drainage parameter at each stage previous to the current stage, which is equivalent to that the current theoretical temperature may be determined at any one of washing stages according to parameters such as the water filling parameter and the drainage parameter at each stage previous to the current stage to determine whether there is the fault in the drainage system, i.e., fault detection may be carried out in the whole process of the dishwasher, improving a user's satisfaction.

With the dishwasher in the relate art, to check the drainage fault, three solutions are usually provided below.

> 1. A flow guiding mechanism is used to guide water to a buoy located inside a bottom plate of the cavity. When the dishwasher is blocked, the buoy with water will float up, triggering the microswitch to trigger an overflow alarm.
> 2. Blockage detection is performed by using power of a variable-frequency washing pump and a drainage pump, fluctuations and changes of a current signal, etc.
> 3. The high-water-level sensor is provided for detecting changes of water level by using changes in pressure of different water volumes, to perform early warning.

However, these solutions have the disadvantages of a complex structure, poor reliability, a variable-frequency scheme only suitable for a type of the variable-frequency pump, and high cost due to use of the high-water-level sensor.

With the dishwasher according to the embodiments of the present disclosure, there is no need to provide devices like a liquid level sensor and a microswitch. Moreover, a simpler structure is provided, which may be used for achieving the blockage detection for drainpipe. In addition, fault detection is possible throughout the washing process, which improves the user's satisfaction.

In the embodiments of the present disclosure, the terms "first", "second", "third", etc., are merely for description, and cannot be understood as indicating or implying relative importance. It should be understood that "two" referred to herein means two or more, unless specified otherwise. Terms such as "installation", "connection", "connected to", "fixed" and the like should be understood in a broad sense. For example, "connection" may be a fixed connection or a detachable connection or an integral connection; "connected to" may be directly or indirectly connected through an intermediate. For those of ordinary skill in the art, the specific meaning of the above-mentioned terms in the embodiments of the present disclosure can be understood according to specific circumstances.

Further, although the operations are depicted in a specific order, this should be understood as requiring these operations to be performed in the specific order illustrated or in a sequential order, or requiring all illustrated operations to be performed to achieve the desired results. Under certain circumstances, multitasking and parallel process may be advantageous. Likewise, although several specific implementation details are comprised in the above discussion, these should not be construed as limitations on the scope of the present disclosure. Certain features that are described in the context of separate embodiments can also be implemented in combination in a single embodiment. Conversely, various features described in the context of a single embodiment can also be implemented in multiple embodiments separately or in any suitable combination.

Although the subject matter has been described in language specific to structural features and/or logical actions of method, it should be understood that the subject matter defined in the appended claims is not necessarily limited to the specific features or actions described above. On the contrary, the specific features and actions described above are merely exemplary forms of implementing the claims.

Although embodiments of the present disclosure have been illustrated and described, it is conceivable for those of ordinary skilled in the art that various changes, modifications, replacements, and variations can be made to these embodiments without departing from the principles and spirit of the present disclosure. The scope of the present disclosure shall be defined by the claims as appended and their equivalents.

**Claims**

1.  A method for detecting a drainage fault for a dishwasher, the method comprising:

    obtaining a current temperature of a current solution in the dishwasher at a current washing stage;
    determining a current theoretical temperature based on an amount of filling water at the current washing stage and a water filling and drainage parameter at each stage prior to the current washing stage; and
    determining whether there is a drainage fault based on the current temperature and the current theoretical temperature.

2.  The method for detecting the drainage fault for the dishwasher according to claim 1, wherein said determining the current theoretical temperature based on the amount of filling water at the current washing stage and the water filling and drainage parameter at each stage prior to the current washing stage comprises:

> determining, based on the water filling and drainage parameter at each stage prior to the current washing stage, a first heat released when a temperature before drainage at a stage previous to the current stage lowers to the current theoretical temperature;
> determining, based on the amount of filling water and a current filling water temperature at the current washing stage, a second heat absorbed when the current filling water temperature is changed to the current theoretical temperature; and
> determining the current theoretical temperature based on the first heat is equal to the second heat.

3. The method for detecting the drainage fault for the dishwasher according to claim 2, wherein the water filling and drainage parameter at each stage prior to the current washing stage comprises a filling water temperature, an amount of filling water, and a temperature before drainage at each stage prior to the current washing stage.

4. The method for detecting the drainage fault for the dishwasher according to claim 3, further comprising, when the current washing stage is at a second washing stage:

> determining, based on an amount of filling water at a first washing stage and a temperature before drainage at the first washing stage and the current theoretical temperature, a first heat released by the amount of filling water at the first washing stage when a filling water temperature at the first washing stage lowers to the current theoretical temperature; and
> determining, based on an amount of filling water at the second washing stage and a filling water temperature at the second washing stage and the current theoretical temperature, a second heat required for the amount of filling water at the second washing stage to rise to the current theoretical temperature from the filling water temperature at the second washing stage.

5. The method for detecting the drainage fault for the dishwasher according to claim 2, wherein the water filling and drainage parameter at each stage prior to the current washing stage comprises a filling water temperature, a temperature before drainage, and a rated amount of residual water at each stage prior to the current washing stage.

6. The method for detecting the drainage fault for the dishwasher according to claim 5, further comprising, when the current washing stage is at a second washing stage:

> determining, based on a rated amount of residual water at a first washing stage and a temperature before drainage at the first washing stage and the current theoretical temperature, a first heat released by the rated amount of residual water at the first washing stage when the temperature before drainage at the first washing stage lowers to the current theoretical temperature; and
> determining, based on an amount of filling water at the second washing stage and a filling water temperature at the second washing stage and the current theoretical temperature, a second heat required for the amount of filling water at the second washing stage to rise to the current theoretical temperature from the filling water temperature at the second washing stage.

7. The method for detecting the drainage fault for the dishwasher according to any one of claims 1 to 6, wherein said determining whether there is the drainage fault based on the current temperature and the current theoretical temperature comprises:

> determining that there is the drainage fault when the current temperature is greater than the current theoretical temperature; and
> determining that there is no drainage fault when the current temperature is smaller than or equal to the current theoretical temperature.

8. The method for detecting the drainage fault of the dishwasher according to any one of claims 1 to 6, wherein said determining whether there is the drainage fault based on the current temperature and the current theoretical temperature comprises:

> determining that there is the drainage fault when a temperature difference between the current temperature and the current theoretical temperature is outside a predetermined temperature difference interval; and
> determining that there is no drainage fault when the temperature difference between the current temperature and the current theoretical temperature is within the predetermined temperature difference interval.

9. The method for detecting the drainage fault of the dishwasher according to claim 8, wherein the predetermined temperature difference interval is greater than or equal to 0°C and smaller than or equal to 5°C.

10. An apparatus for detecting a drainage fault for a dishwasher, comprising:

an obtaining unit configured to obtain a current temperature of a current solution in the dishwasher at a current washing stage; and
a determination unit configured to determine whether there is a drainage fault based on the current temperature and a current theoretical temperature.

11. A device for detecting a drainage fault for a dishwasher, comprising a processing unit, the processing unit comprising:

a memory having a computer program stored thereon; and
a processor configured to implement, when running the computer program, a method for detecting the drainage fault of the dishwasher according to any one of claims 1 to 9.

12. A readable storage medium, comprising a processing unit, the processing unit comprising:

a memory having a computer program stored thereon; and
a processor configured to implement, when running the computer program, a method for detecting the drainage fault for the dishwasher according to any one of claims 1 to 9.

13. A dishwasher, comprising:

an apparatus for detecting the drainage fault for the dishwasher according to claim 10, or a device for detecting the drainage fault for the dishwasher according to claim 11; or
a readable storage medium according to claim 12.

Begin

Obtaining a current temperature of a current solution in the dishwasher at a current washing stage — S102

Determining a current theoretical temperature based on an amount of filling water at the current washing stage and a water filling and drainage parameter at each stage prior to the current washing stage — S104

Determining whether there is a drainage fault based on the current temperature and the current theoretical temperature — S106

End

FIG. 1

Begin

Obtaining a current temperature of a current solution in the dishwasher at a current washing stage — S202

Determining a current theoretical temperature Tx based on a formula of $Tx = A1 \times (T1V2 + T2V1)/(V1+V2) + C1$ — S204

Determining whether the current temperature is greater than the current theoretical temperature — S206

Yes

No

Determining that there is a drainage fault in a drainage system of the dishwasher — S208

Determining that there is no drainage fault in the drainage system of the dishwasher — S210

End

FIG. 2

Begin

Obtaining a current temperature of a current solution in the dishwasher at a current washing stage ⌇ S302

Determining a current theoretical temperature Tx based on Tx=A2×(T2×V0+T1×V2)/(V0+V2)+C2 ⌇ S304

S306

Determining whether the current temperature is greater than the current theoretical temperature

Yes

No

Determining that there is a drainage fault in a drainage system of the dishwasher ⌇ S308

Determining that there is no drainage fault in the drainage system of the dishwasher ⌇ S310

End

FIG. 3

Begin

Obtaining a current temperature of a current solution in the dishwasher at a current washing stage ⌇ S402

Determining a current theoretical temperature Tx based on Tx=A3×((T1×V2+T2×V1)/(V1+V2)+(T2×V0+T1×V2)/(V0+V2))+C3 ⌇ S404

S406

Determining whether the current temperature is greater than the current theoretical temperature

Yes

No

Determining that there is a drainage fault in a drainage system of the dishwasher ⌇ S408

Determining that there is no drainage fault in the drainage system of the dishwasher ⌇ S410

End

FIG. 4

Begin

Discharging water — S502

Filling water, and grabbing an initial water temperature T1 — S504

The amount of water V1 for first washing — S506

For the first washing and drainage, grabbing a temperature before the drainage T2 and an amount of residual water after the drainage V0 — S508

For the second washing and water filling, the volume of filling water for the beginning filling is V2, a real-time temperature is Ty when filling water with V2, the theoretical temperature after water filling is Tx=f(V0、T1、V1、T2、V2) — S510

S512

Determining Ty is greater than Tx

Yes

No

Raising an alarm in response to that the drainpipe is blocked — S514

Operation continues — S516

End

FIG. 5

600

Obtaining unit — 602

Determination unit — 604

FIG. 6

700

Processing unit 702

FIG. 7

<table>
<tr><td colspan="2">**INTERNATIONAL SEARCH REPORT**</td><td colspan="2">International application No.<br>**PCT/CN2023/091572**</td></tr>
</table>

**A. CLASSIFICATION OF SUBJECT MATTER**

A47L15/42(2006.01)i

According to International Patent Classification (IPC) or to both national classification and IPC

**B. FIELDS SEARCHED**

Minimum documentation searched (classification system followed by classification symbols)

IPC:A47L15

Documentation searched other than minimum documentation to the extent that such documents are included in the fields searched

Electronic data base consulted during the international search (name of data base and, where practicable, search terms used)

CNABS, CNTXT, 百度, BAIDU, CNKI, 万方, WANFANG: 排水, 故障, 异常, 正常, 堵塞, 堵住, 比热, 比热容, 水温, 温度, 实时, 理论; DWPI, WPABS, USTXT, EPTXT, IEEE, ELSEVIER SCIENCE: plug, clog, block, temperature, specific heat capacity, drain, dewater, bleed, fault, anomaly, realtime, theoretical, abnormal

**C. DOCUMENTS CONSIDERED TO BE RELEVANT**

| Category* | Citation of document, with indication, where appropriate, of the relevant passages | Relevant to claim No. |
|---|---|---|
| X | CN 113156532 A (QINGDAO HAIER DISHWASHER CO., LTD. et al.) 23 July 2021 (2021-07-23)<br>description, paragraphs 6-77, and figure 1 | 1, 10-13 |
| A | CN 108185962 A (FOSHAN SHUNDE MIDEA WASHING APPLIANCES MANUFACTURING CO., LTD. et al.) 22 June 2018 (2018-06-22)<br>description, paragraphs 4-58, and figures 1-4 | 1-13 |
| A | CN 108716083 A (FOSHAN SHUNDE MIDEA WASHING APPLIANCES MANUFACTURING CO., LTD. et al.) 30 October 2018 (2018-10-30)<br>entire document | 1-13 |
| A | CN 112971664 A (ZHUHAI GREE ELECTRIC APPLIANCES INC.) 18 June 2021 (2021-06-18)<br>entire document | 1-13 |
| A | CN 113261904 A (QINGDAO HAIER DISHWASHER CO., LTD. et al.) 17 August 2021 (2021-08-17)<br>entire document | 1-13 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 August 2023** | **06 August 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**EP 4 378 369 A1**

**INTERNATIONAL SEARCH REPORT**

International application No.

**PCT/CN2023/091572**

**C. DOCUMENTS CONSIDERED TO BE RELEVANT**

| Category* | Citation of document, with indication, where appropriate, of the relevant passages | Relevant to claim No. |
|---|---|---|
| A | JP 2011000321 A (MITSUBISHI ELECTRIC CORP. et al.) 06 January 2011 (2011-01-06) entire document | 1-13 |
| A | JP H09154798 A (MITSUBISHI ELECTRIC CORP. et al.) 17 June 1997 (1997-06-17) entire document | 1-13 |

Form PCT/ISA/210 (second sheet) (July 2022)

**INTERNATIONAL SEARCH REPORT**
*Information on patent family members*

| International application No. |
| --- |
| **PCT/CN2023/091572** |

| Patent document cited in search report | | | Publication date (day/month/year) | Patent family member(s) | | | Publication date (day/month/year) |
| --- | --- | --- | --- | --- | --- | --- | --- |
| CN | 113156532 | A | 23 July 2021 | None | | | |
| CN | 108185962 | A | 22 June 2018 | CN | 108185962 | B | 18 November 2022 |
| CN | 108716083 | A | 30 October 2018 | None | | | |
| CN | 112971664 | A | 18 June 2021 | None | | | |
| CN | 113261904 | A | 17 August 2021 | None | | | |
| JP | 2011000321 | A | 06 January 2011 | JP | 5279628 | B2 | 04 September 2013 |
| JP | H09154798 | A | 17 June 1997 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211274022